# EUROPEAN PATENT SPECIFICATION

(11) **EP 0 985 309 B1**
(45) Date of publication and mention of the grant of the patent: **31.10.2007**
(21) Application number: 98916877.8
(22) Date of filing: 20.02.1998
(51) Int. Cl.: H04M 3/42

(54) **DELIVERY OF ANNOUNCEMENTS TO A USER OF A COMMUNICATIONS SYSTEM WHEN ROAMING IN A NETWORK AWAY FROM THE USER'S HOME NETWORK**
ANSAGEN-ÜBERMITTLUNG AN EINEN TEILNEHMER EINES KOMMUNIKATIONSSYSTEMS, DER SICH IN EINEM ANDEREN ALS SEINEM HEIMATNETZ AUFHÄLT
REMISE D'ANNONCES PARLEES A UN UTILISATEUR D'UN SYSTEME DE TELECOMMUNICATIONS, LORSQUE CET UTILISATEUR SE DEPLACE DANS UN RESEAU SITUE A DISTANCE DE SON RESEAU LOCAL

(30) Priority: 20.02.1997 EP 97410020
(43) Date of publication of application: 15.03.2000
(73) Proprietor: Hewlett-Packard Company A Delaware Corporation, Palo Alto, CA 94304 (US)
(72) Inventor: CALOUD, Philippe, F-38330 Saint-Ismier (FR); RAGUIDEAU, Nicolas, F-38240 Meylan (FR); IRVINE, Garry, F-38190 Bernin (FR)
(74) Representative: Squibbs, Robert Francis
(86) International application number: PCT/EP1998/001120
(87) International publication number: WO 1998/037685

(56) References cited:
- EP-A- 0 654 930
- EP-A- 0 724 368
- LOW C: "THE INTERNET TELEPHONY RED HERRING" HP LABORATORIES TECHNICAL REPORT, 15 May 1996, pages 1-15, XP002043901
- SMITH D G: "AN INTRODUCTION TO GSM ENHANCEMENTS FOR OPERATOR SPECIFIC SERVICES (CAMEL)" IEE COLLOQUIUM ON MOBILE COMMUNICATIONS TOWARDS THE NEXT MILLENIUM AND BEYOND, 17 May 1996, pages 6/1-6/09, XP000605991
- ECKARDT T ET AL: "ON THE PERSONAL COMMUNICATIONS IMPACTS ON MULTIMEDIA TELESERVICES" MULTIMEDIA: ADVANCED TELESERVICES AND HIGH-SPEED COMMUNICATION ARCHITECTURES. INTERNATIONAL WORKSHOP, 26 September 1994, pages 435-449, XP000613104

## Description

### Technical-Field

The present invention relates to a method and apparatus for providing familiar service announcements to a user of a communications network who is visiting a network other than the user's home network. In particular, but not exclusively, the present invention relates to such method and apparatus in mobile radio systems such as systems operating according to the GSM standards.

As used herein, the term "announcement" covers not only voice messages (whether giving instructions, delivering a message, asking a question, etc) but also any other audible sequence such as a tune and, where appropriate, visual images and sequences.

### Background Art

In mobile radio systems, such as GSM, a user ("subscriber") will generally be registered in one network but have the ability to roam across other networks of the system. The user has a unique identity that enables a visited network (that is, any network other than the user's home network) to identify the user's home network and thereby retrieve the user's profile. In particular, the visited network can ascertain for what services the user is registered and appropriately respond to service requests from or in relation to the user.

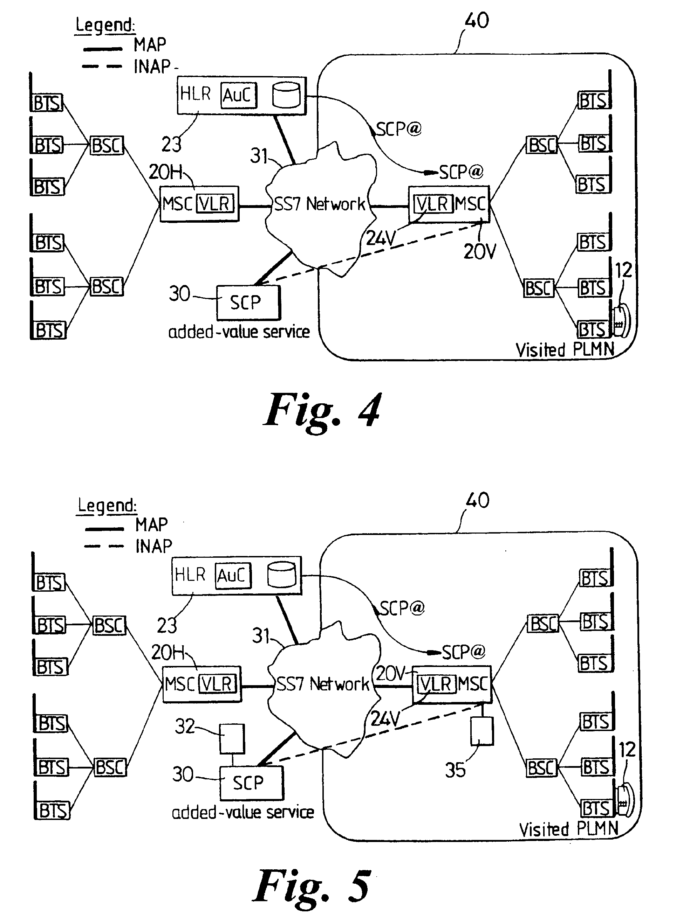

In GSM a number of standard services are defined and are available in every network. In addition, there are network specific value-added services. Unfortunately, there has been no agreed means for enabling a roaming user to have the benefis of these value-added services whilst outside the user's home network. Recently, standardisation work has been undertaken by ETSI to provide a standard protocol for enabling a visited network to have the home network of a user run a value-added service for a user who is roaming in the visited network, the results of running the service logic of the service being communicated to the visited network for delivery of the service to the user. This GSM enhancement is called CAMEL (Customised Applications for Mobile network Enhanced Logic) and is described in the paper "An introduction to GSM Enhancements for Operator Specific Services (Camel)", D. G. Smith, IEE Colloquium on Mobile Communications Towards the Next Millenium and Beyond, 17 May 1996, pages 6/1-6/09. In addition, an overview is briefly given hereinafter with reference to Figure 4 of the accompanying drawings.

However, currently there is no means for handling the announcements involved in value added services that are being provided to a visited network from a user's home network. To understand the problem, it must be appreciated that normally a service control point (or other service-logic execution platform) invokes any announcement required by a service by specifying an announcement number; this number is passed back to the MSC (or SSP in a fixed network IN solution) where the announcement corresponding that number is played to the user over the bearer connection set up to the user. Relying on the announcements available in the visited network will generally result in complete nonsense being delivered to the user as there is no uniformity in announcement numbering. Even if there were, this would not solve the problem that the visited-network announcement may well be in a foreign language for the user.

In the paper "The Internet Telephony Red Herring" Colin Low, HP Laboratories Technical Report, 15 May 1996, pages 1-15, a description is given of how the service control subsystem of a telephone network can access service resource items stored by subscribers on internet servers. Furthermore, EP 0 654 930 (AT&T) discloses a central database for holding user-related data (including service profile data), this database being accessible (via SS7 links) from any of a plurality of telephone networks. When needed, service details are passed to regional processing nodes which then deliver services as required in the language specified (the nodes can deliver announcements in the appropriate language).

### Summary of the Invention

According to one aspect of the present invention, there is provided a method of facilitating service delivery to a user registered for a particular service with a home network of a communications system, whilst the user is roaming in another network, herein a "visited" network, of the communications system; said particular service having an associated announcement accessible to a service subsystem of the home network; the method comprising the steps of:
(a) determining the presence of the user in a said visited network and identifying the user's home-network service subsystem;
(b) either before or at the time that said particular service is required in respect of the user when the latter is roaming in said visited network, causing the user's home-network service subsystem either to pass to a service subsystem of the visited network, or to direct the latter towards, the announcement associated with the requested service, said announcement being transferred to media delivery means of the service subsystem of the visited network over a data network, and
(c) during delivery of the service in the visited network, delivering the announcement from the media delivery means of the visited network, over a bearer connection of the visited network, to the user.

This arrangement permits announcements familiar to the user to be played to the user when a service is required whilst the user is roaming. This is particularly advantageous where either the native visited-network announcements comprise foreign language speech or there are no equivalent announcements available in the visited network to those required.

In a preferred embodiment, the communications system is a mobile phone system such as GSM. For example, the system may be a GSM system with the CAMEL enhancement that enables a home-network value added service to be provided to the user when roaming in a visited network, by running service logic on the service subsystem of the home network and arranging for the results to be passed to the service subsystem of the visited network. In this case, the announcement associated with the service is provided, or pointed to, by the home-network service subsystem and used by the visited-network service subsystem in delivering the service.

Where the service to be provided is a standard service provided by both the service subsystem of the home network and the service subsystem of the visited network with both subsystems having service logic for implementing the service, then generally upon the service being required whilst the user is roaming in the visited network, the service subsystem of the visited network will run its service logic for the service; in this case the associated announcement used will be that provided, or pointed to, by the home-network service subsystem.

In one embodiment the announcement is held in storage means of the home network and is passed in step (b) by the home-network service subsystem to the visited-network service subsystem. In another embodiment in which the announcement is also held in storage means of the home network, the announcement is pointed to in step (b) by the home-network service subsystem for fetching by the visited-network service subsystem.

Rather than the announcement being held in the home network, it could be held in storage means of a data network external to said communications system. In this case, the announcement can either be fetched in step (b) by the home network service subsystem and passed by it to the visited-network service subsystem, or the announcement could be pointed to in step (b) by the home network service subsystem and then fetched by the visited-network service subsystem.

Advantageously the aforesaid external data network is the Internet or an Intranet and the announcement is a personal one determined by the user and held on an Internet/Intranet server. Preferably the server is an HTTP server and the home-network service subsystem points the visited-network to it by passing the URL of the announcement.

### Brief Description of Drawings

Embodiments of the invention will now be described, by way of non-limiting example, with reference to the accompanying drawings, in which:
- Figure 1: is a block diagram showing the main components of a GSM cellular mobile radio system;
- Figure 2: is a diagram illustrating the provision of services in a user's home PLMN;
- Figure 3: is a diagram illustrating the provision of services in a PLMN being visited by a user but without implementation of the CAMEL enhancement;
- Figure 4: is a diagram illustrating the provision of services in a PLMN being visited by a user, with the CAMEL enhancement implemented;
- Figure 5: is a diagram illustrating a first embodiment of the invention in which announcements are stored in a database connected to an SCP of the home PLMN; and
- Figure 6: is a diagram illustrating a second embodiment of the invention in which announcements are stored on a server connected to an external network.

### Best Mode for Carrying Out the Invention

### Overview of a GSM Network

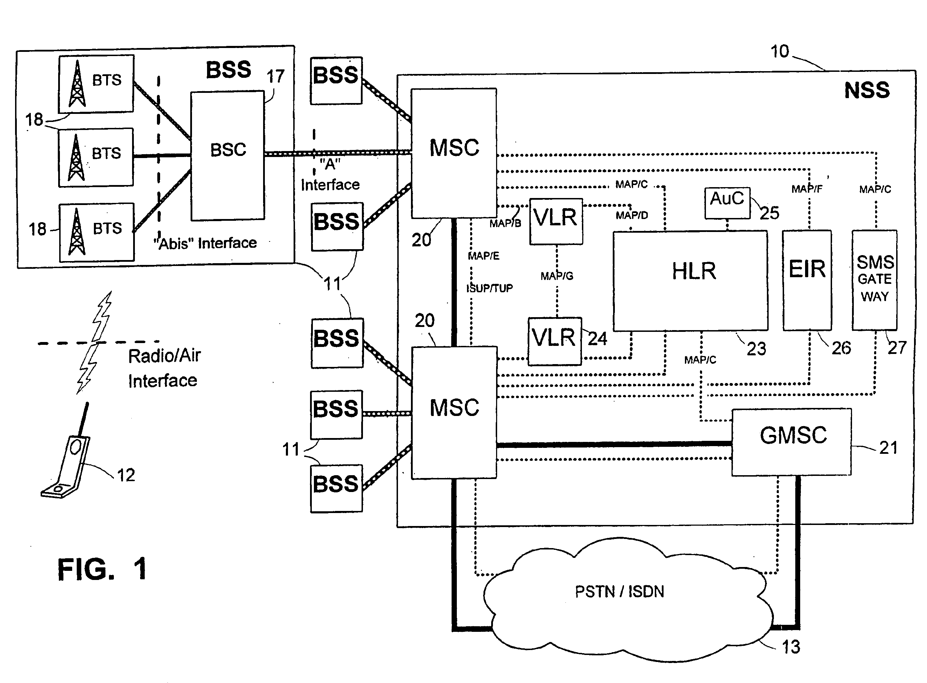

To facilitate an understanding of the present invention a brief overview will be given of a GSM-type network . Thus, Figure 1 is a diagram showing the main elements of a public land mobile network (PLMN) based on GSM digital cellular radio technology.

The Figure 1 network comprises a network and switching subsystem (NSS) 10 which connects with a plurality of base station subsystems (BSS) 11; the BSS provide radio communication with mobile stations 12 (only one of which is shown in Figure 1). The NSS 10 also communicates with the fixed public network 13 (the public switched telephone network PSTN and integrated digital services network ISDN). Indeed the PLMN can be thought of as an access path to the PSTN/ISDN, though calls may also be wholly contained within the PLMN.

Each BSS 11 comprises a base station controller (BSC) 17, and a plurality of base transceiver stations (BTS) 18 each controlled by the BSC 17. Each BTS 18 has radio transmitters and receivers for providing radio coverage of a local area known as a cell' .

Signaling and user data (digitised voice and other digital data such as computer data) pass between each mobile station 12 and the BTS 18 of the cell in which the mobile station is located. As a mobile station moves from one cell to another, control of handover of communication with the mobile station from the BTS of the old cell to the BTS of the new cell, is effected by the BSC.

The radio interface between a mobile station and BTS is standardised within a particular system such as GSM. Similarly, the interface between each BTS 18 and its associated BSC 17, by which user data and signaling are exchanged between these elements, is also generally standardised (in GSM, this interface is known as the 'Abis' interface).

Each BSS 11 communicates with a mobile switching centre (MSC) 20 of the NSS 10, each MSC 20 generally being in communication with several BSS. The interface between a BSS and an MSC is again generally standardised, this interface being known as the 'A' interface in GSM.

In GSM networks, user data and signaling are multiplexed across the radio interface, the 'Abis' interface and the 'A' Interface. However, within the NSS, user data and signaling are handled separately. This is shown in Figure 1 by depicting user-data paths in solid lines and signaling paths in dotted lines; when both use the same path, a solid line with superimposed white dots is used.

In the NSS, the user data is handled by the MSCs and for a given call, the user data will commonly traverse two MSCs 20. Although in Figure 1 the MSCs 20 are shown as directly connected by a solid line, this should be understood merely as showing that user-data traffic can pass between the MSCs; in practice, whilst a direct connection is used where justified by traffic levels, MSCs may be connected through the intermediary of the fixed public network 13.

In addition to the MSCs 20, user data may also be handled in the NSS by what in GSM parlance is known as a gateway MSC (GMSC) 21. The purpose of the GMSC 21 is to handle calls set up in either direction between mobile stations and outside of the PLMN; thus for a call from outside of the PLMN towards a mobile station, the GMSC determines where the call should be routed to catch up with the mobile station. In practice, GMSC functionality is often provided at each MSC.

The remaining components of the NSS 10 are concerned with control functions and these components communicate with each other, with the MSCs and GMSC, and with the fixed public network through signaling links using a signaling system generally based on the SS7 (CCITT Signaling System No.7) standard. Within the NSS 10 a GSM system uses the MAP (Mobile Application Part) protocols for non-circuit-related signaling traffic and the TUP (Telephone User Part) and ISUP (ISDN User Part) for circuit-related signaling traffic. Again, the signaling paths between components of the NSS 10 are not necessarily direct but will generally make use of the SS7 network associated with the fixed public network.

The components of the NSS not already described are:
- the Home Location Register (HLR) 23 - this contains information about subscribers registered with the PLMN (such as the services available to a particular subscriber and the PLMN network address of the MSC where the subscriber is currently located);
- the Visitor Location Register (VLR) 24 - generally, each MSC has its own associated VLR which holds both subscriber profile data about users currently visiting the area covered by the MSC (including data about the services for which they are registered), and data about the current location of each user within the MSCs coverage area;
- the Authentication Register (AuC) 25 - this component is closely associated with the HLR and holds data providing for subscriber identification and encryption of calls;
- the Equipment Identify Register (EIR) 26 - this stores information about the mobile stations 12 themselves;
- the SMS Gateway 27 - in GSM, a special "Short Message Service" is available, this being provided through the SMS Gateway.

Three main control functions may be identified in regulating calls in the PLMN (the signaling traffic being the communication required to implement these functions). These three functions are:
- **radio resource management** - this is the task of establishing, maintaining and releasing stable connections between mobile stations and an MSC despite movements of a mobile station. This management function primarily involves the BSCs but also the BTSs and MSCs.
- **mobility management** - this is the task of maintaining up-to-date user location information so as to permit incoming calls to be routed to the appropriate mobile station; in GSM, the address of the MSC in the area of which a user is to be found , is stored in the user's HLR whilst the user's location within that area is held in the VLR associated with the MSC. This management function involves the MSCs/VLRs and the HLR.
- **call management** - this task involves, as well as the usual control of calls as found in the fixed public network, the routing of calls towards a mobile station when the location of the latter is initially not known. In GSM, for calls towards a mobile station from outside of the PLMN in which the user of the mobile station is registered, it is the task of the GMSC to find out from the home HLR of the user being called, where that user is and then appropriately route the incoming call. The call management function involves the MSC/VLR, HLR and GMSC.

In GSM, the PLMN knows the location of a mobile (unless completely switched off) at least to within a particular location area (this is a group of radio cells depending from the same MSC - there may be more than one location associated with each MSC). This is achieved by having each mobile station initiate a location update when it determines it has changed location area. A mobile station can tell when it has changed location area because the BTS of each cell periodically transmits the identity of the cell and location area in which it is located; by storing this location area information, the mobile station can readily tell when it changes location area.

Since the PLMN now knows the location area of each mobile station, when it is necessary to route an incoming call to a particular mobile, it is only necessary to transmit a paging message in the cells of the relevant location area inorder to find out exactly where the mobile station is.

Finally, it is worth noting how a subscriber is identified. Within the international GSM community, each subscriber is uniquely identified by a number, the IMSI (International Mobile Subscriber identity). This number is fifteen digits or less and comprises a 3-digit mobile country code (MCC), a 2-digit mobile network code (MNC) giving a subscriber's home PLMN, and a mobile subscriber identification number (MSIN) identifying the subscriber in his home PLMN. The IMSI is not the telephone number of the subscriber - many telephone numbers can be assigned to a single subscriber.

The IMSI of a subscriber is held in a subscriber identity module (SIM) that plugs into a mobile station. Each time the mobile station accesses the PLMN, the IMSI held in the associated SIM is provided to the PLMN (either directly, or more usually, indirectly in the form of a TMSI that is an alias for the IMSI within the current location area of the subscriber). The IMSI allows the PLMN to access the HLR where the subscriber is registered to retrieve subscriber-specific data (such as services for which the user is registered) and to record the MSC in whose area the mobile station is currently located, according to context.

### Service Provision and CAMEL

A number of standard services, such as inbound call barring, are available in GSM (so-called Supplementary Services) and a user may register for selected ones of these services with this selection being stored in the subscriber profile data held by the HLR. When a user exercises, in the user's home PLMN 29, a service for which the user is registered, the service is executed in standard manner well understood by persons skilled in the art. Any associated announcements will be in a form suitable for the likely users of the PLMN 29 (for example, in Finland the annoucements will be in Finnish); generally the MSC will have associated announcement delivery means for delivering announcements over the bearer connection to the user.

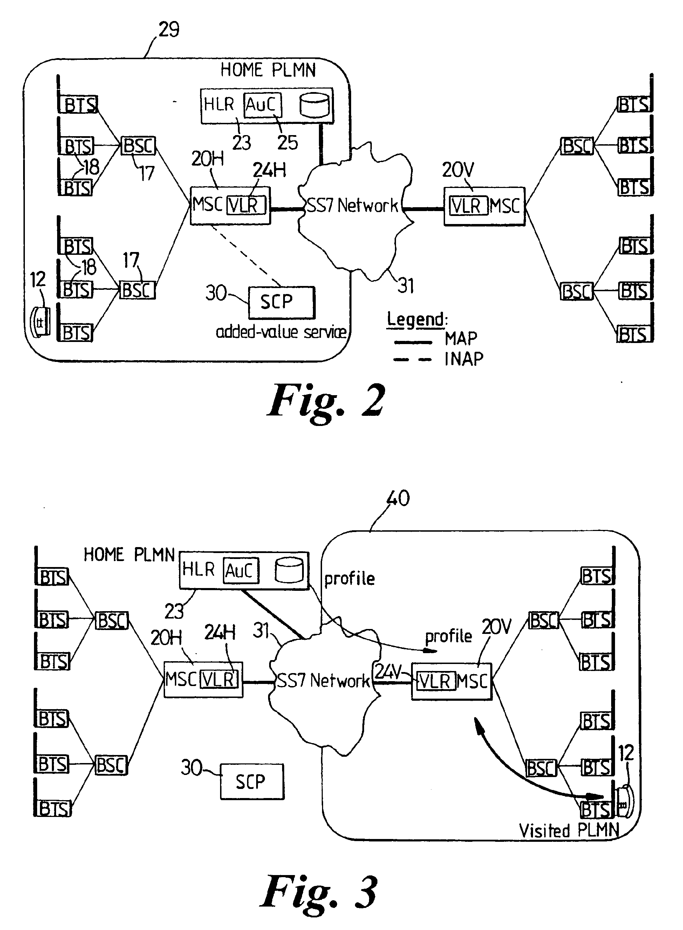

Such service provision will involve one or more of the HLR 23 and the current MSC 20H /VLR 24H relevant to the user (- see Figure 2, where the PLMN components have been given the same numbers as in Figure 1, the suffix H being used to indicate, if needed, a component of the home PLMN 29 as distinct from a similarly numbered component of a visited PLMN 40, such components being suffixed with a V).

Value added (non-standard) services provided by the PLMN operator are executed on an SCP (service control point) 30 connected to the MSC 20H; again a user must register for a desired service and the MSC will check the profile of a user before requesting the SCP 30 to execute the service. Any required announcements are played by the aforesaid delivery means associated with the MSC, the SCP specifying the required announcement by number.

The service-related elements of the SCP 30, HLR 23, VLR 24H and MSC 20H cooperate to provide a service subsystem of the PLMN.

When the user roams out of the home PLMN 29 and visits a PLMN 40 communicating with the home PLMN through the SS7 signalling network (see Figure 3), then standard services for which the user has registered in PLMN 29 are still available. The visited PLMN 40 knows for which services the user is registered because it fetches the user's profile from the HLR 23 of the home PLMN 29 and stores the profile in the current relevant VLR 24V (recall that the user's home PLMN is known to the visited PLMN by the user's IMSI). One drawback of the current arrangement is that any announcements associated with the standard service will be in the form / language suitable for the home users of the visited PLMN and this can be a problem.

More seriously,when a user roaming in the visited PLMN wishes to take advantage of a value-added service for which the user is registered in the home PLMN 29, there is presently a problem in doing so because the original GSM specifications did not define any way of doing this. It is for this reason that the CAMEL enhancement has been brought forward. In a CAMEL compliant system (see Figure 4), the visited-PLMN VLR 24V as well as being provided with the user profile data, is also passed the address of the home-PLMN SCP 30 designated to handle the user's home-PLMN value-added services. In addition, a message set is defined for enabling the SCP 30 to talk to the visited-PLMN MSC/VLR subsytem 20V/24V. Now when a value-added service is required in respect of a user roaming in the visited PLMN 40, the MSC/VLR subsystem of the visited PLMN can communicate over the signalling network 31 with the SCP 30 and request it to run the required service. The results of the execution of the corresponding service logic are passed back to the visited-PLMN 1VISC/VLR subsystem which then delivers the service as directed.

However, the problem remains that announcements will be inappropriate because of the practice of having the SCP identify announcements by numbers; even if consistent in meaning between PLMNs 29 and 40 there remains the problem that the announcements delivered over the bearer connection from the MSC to the user may be in a foreign language for the user.

### Announcement Delivery

Figure 5 illustrates an embodiment of the invention which overcomes the above drawbacks. In the Figure 5 arrangement, the announcements appropriate to a value-added service belonging to home PLMN 29 are held in a store 32 accessible to the SCP 30. Now when the SCP executes a value-added service for a user roaming in a visited PLMN, as well as passing the visited-PLMN MSC/VLR the results of executing the service logic, the SCP will also pass the required announcements encapsulated within an appropriate SS7 message. The announcement may be in any appropriate form for playback. Whilst in theory delivery of the message could be effected by the announcement-delivery means of the visited-PLMN MSC/VLR subsytem, it may be simpler to provide an additional system component (media delivery node 35) which translates the announcement received from the SCP 30 into a form suitable for delivery over the bearer connection to the user. For example, the announcement may be stored and transferred to the visited PLMN as an ASCII text message and then translated into digitised voice by the the media delivery node 35. For simplicity, the relevant components of the visited PLMN that are involved in the delivery of a service (including one actually executed by SCP 30) and any associated announcement, are hereinafter referred to as the "service subsystem" of the visited PLMN; this subsytem may include additional components to those already mentioned depending on how the PLMN operator chooses to implement the network (for example, a separate service control point may be provided).

The Figure 5 arrangement may be used not only for the non-standard added-value services but also for the standard services. In this case, whilst the related service logic is executed by the visited PLMN, any announcements required by the service are requested from the home-PLMN SCP30 and supplied back over the signalling network for delivery by the node 35 when appropriate.

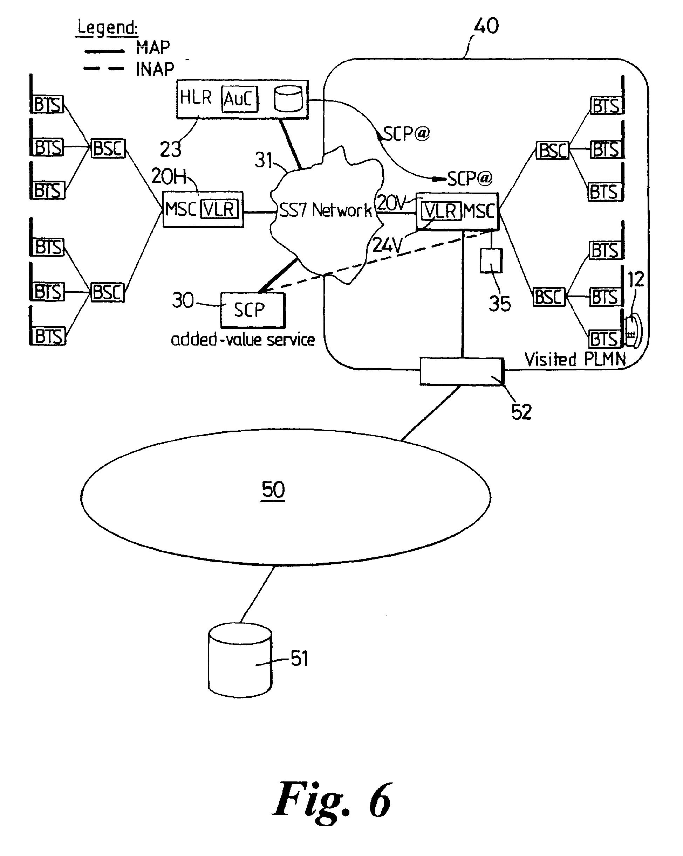

It will be appreciated that a number of variants are possible on the basic arrangement described above with reference to Figure 5. Thus, the announcements could be held elsewhere in the home PLMN and retrieved by the SCP 30 as needed; indeed, as will be described hereinafter with respect to Figure 6, the announcement store may be external of the mobile phone system entirely.

Furthermore, the SCP 30 need not itself directly pass the required announcement to the service subsystem of the visited PLMN, but could simply pass a pointer to the announcement and leave it to the visited-PLMN service subsystem to fetch the announcement.

Another possiblity would be for the visited-PLMN service subsystem to pre-emptively load the announcements (or at least their addresses) upon a home-PLMN user being identified as in the coverage area of the service subsystem.

Instead of the signalling network 31 being used to transfer announcements, it is possible to use another data network (that is a network other than the bearer connection resources of the PLMNs).

Figure 6 illustrates a further embodiment of the invention in which the announcements are held in a server 51 connected to an Intranet or the Internet (that is, an enterprise or public IP based network 40). The server 51 may, for example, be an HTTP server holding the announcements at known URLs. In this case, whilst the SCP 30 could itself fetch the correct announcement, it is preferable that the SCP 30 passes the URL of the required announcement to the service subsystem of the visited PLMN. The visited-network service subsystem then retrieves the announcement through an interface 52 with the network 50. It will be appreciated that the home PLMN also has access to the network 50 in order to retrieve the announcement for use when the user is in the home PLMN 29.

With such an arrangement it is very easy to enable individual users to specify their own personal anouncements - for example, each user could have their own personal announcements stored at respective URLs with the announcements being user-accesible for editing. Alternatively, the announcements for an enterprise could be held in a database accesible through a server-side script at a predetermined URL.

It will be appreciated that the present invention is not restricted to voice announcements for mobile phone systems. So long as the bearer connection is suitable and the user is appropriately equiped, the announcements could be images or video clips. Furthermore, the invention has application to public and private fixed communications system since users of these systems are also mobile and effectively move from a local or home network to remote networks where service announcements may be unintelligible. In such cases, identifying a user's home network would either need to be based on user input of an identifying code (for example, a personal telephone code) or could be done automatically in much the same way as with mobile phones.

## Claims

1. A method of facilitating service delivery to a user (12) registered for a particular service with a home network (29) of a communications system, whilst the user is roaming in another network (40), herein a "visited" network, of the communications system; said particular service having an associated announcement accessible to a service subsystem (20H, 30) of the home network (29); the method comprising the steps of:
(a) determining the presence of the user (12) in a said visited network (40) and identifying the user's home-network service subsystem (20H, 30);
(b) either before or at the time that said particular service is required in respect of the user (12) when the latter is roaming in said visited network (40), causing the user's home-network service subsystem (20H, 30) either to pass to a service subsystem (20V) of the visited network (40), or to direct the latter towards, the announcement associated with the required service, said announcement being transferred to media delivery means (35) of the service subsystem of the visited network (40) over a data network (50), and
(c) during delivery of the service in the visited network (40), delivering the announcement from the media delivery means (35) of the visited network, over a bearer connection of the visited network, to the user (12).

2. A method according to claim 1, wherein on said service being required whilst the user (12) is roaming in the visited network (40), service logic providing the service is run by the service subsystem (20H, 30) of the home network (29) with the results being passed to the service subsystem (20V) of the visited network (40), the announcement associated with the service being provided, or pointed to, by the home-network service subsystem (20H, 30) and used by the visited-network service subsystem (20V) in delivering the service.

3. A method according to claim 1, wherein said service is a standard service provided by both the service subsystem (20H, 30) of the home network (29) and the service subsystem (20V) of the visited network (40) with both subsystems having service logic for implementing the service, whereby on the service being required whilst the user (12) is roaming in the visited network (40), the service subsystem (20V) of the visited network runs its service logic for the service but the associated announcement used is that provided, or pointed to, by the home-network service subsystem (20H, 30).

4. A method according to any one of the preceding claims, wherein said announcement is held in storage means (32) of the home network (29) and is passed in step (b) by the home-network service subsystem (20H, 30) to the visited-network service subsystem (20V).

5. A method according to claim 4, wherein said home-network service subsystem comprises a service control point (30) to which said storage means (32) is connected.

6. A method according to any one of claims 1 to 3, wherein said announcement is held in storage means (32) of the home network (29) and is pointed to in step (b) by the home-network service subsystem (20H, 30) for fetching by the visited-network service subsystem (20V).

7. A method according to any one of claims 1 to 3, wherein said announcement is held in storage means (51) of a data network (50) external to said communications system, the announcement being fetched in step (b) by the home network service subsystem (20H, 30) and passed by it to the visited-network service subsystem (20V).

8. A method according to any one of claims 1 to 3, wherein said announcement is held in storage means (51) of a data network (50) external to said communications system, the announcement being pointed to in step (b) by the home network service subsystem (20H, 30) and then fetched by the visited-network service subsystem (20V).

9. A method according to claim 7 or claim 8, wherein said external data network (50) is the Internet/Intranet and the announcement is a personal one determined by the user and held on an Internet/Intranet server (51).

10. A method according to claim 9, wherein said server (51) is an HTTP server and home-network service subsystem (20H, 30) points the visited-network to it by passing the URL of the announcement.

11. A method according to claim 1, wherein said announcement is transferred to the media delivery means (35) of the visited network over a signalling system (31) of the communications system

12. A method according to any one of the preceding claims, wherein said communications system is a mobile phone system.

## Patentansprüche

1. Ein Verfahren zum Erleichtern einer Dienstlieferung an einen Benutzer (12), der für einen speziellen Dienst bei einem Heimatnetz (29) eines Kommunikationssystems registriert ist, während der Benutzer in einem anderen Netz (40) des Kommunikationssystems, hierin ein "besuchtes" Netz, Gastteilnehmer ist; wobei der spezielle Dienst eine zugeordnete Ansage aufweist, auf die ein Dienstuntersystem (20H, 30) des Heimatnetzes (29) zugreifen kann; wobei das Verfahren folgende Schritte aufweist:
(a) Bestimmen der Anwesenheit des Benutzers (12) in einem besuchten Netz (40) und Identifizieren des Heimatnetz-Dienstuntersystems (20H, 30) des Benutzers;
(b) Bewirken, entweder bevor oder zu dem Zeitpunkt, zu dem der spezielle Dienst hinsichtlich des Benutzers (12) angefordert wird, wenn derselbe Gastteilnehmer in dem besuchten Netz (40) ist, dass das Heimatnetz-Dienstuntersystem (20H, 30) des Benutzers entweder die Ansage, die dem angeforderten Dienst zugeordnet ist, an ein Dienstuntersystem (20V) des besuchten Netzes (40) weiterleitet oder diese zu demselben hin leitet, wobei die Ansage über ein Datennetz (50) an eine Medienliefereinrichtung (35) des Dienstuntersystems des besuchten Netzes (40) übermittelt wird, und
(c) Liefern der Ansage von der Medienliefereinrichtung (35) des besuchten Netzes über eine Trägerverbindung des besuchten Netzes an den Benutzer (12) während einer Lieferung des Dienstes in dem besuchten Netz (40).

2. Ein Verfahren gemäß Anspruch 1, bei dem, wenn der Dienst angefordert wird, während der Benutzer (12) Gastteilnehmer in dem besuchten Netz (40) ist, eine Dienstlogik, die den Dienst bereitstellt, durch das Dienstuntersystem (20H, 30) des Heimatnetzes (29) ausgeführt wird, wobei die Ergebnisse an das Dienstuntersystem (20V) des besuchten Netzes (40) weitergeleitet werden, wobei die dem Dienst zugeordnete Ansage durch das Heimatnetz-Dienstuntersystem (20H, 30) bereitgestellt oder angezeigt wird und durch das Dienstuntersystem (20V) des besuchten Netzes bei einer Lieferung des Dienstes verwendet wird.

3. Ein Verfahren gemäß Anspruch 1, bei dem der Dienst ein Standarddienst ist, der sowohl durch das Dienstuntersystem (20H, 30) des Heimatnetzes (29) als auch durch das Dienstuntersystem (20V) des besuchten Netzes (40) bereitgestellt wird, wobei beide Untersysteme eine Dienstlogik zum Implementieren des Dienstes aufweisen, wobei, wenn der Dienst angefordert wird, während der Benutzer (12) Gastteilnehmer in dem besuchten Netz (40) ist, das Dienstuntersystem (20V) des besuchten Netzes die Dienstlogik desselben für den Dienst ausführt, aber die verwendete zugeordnete Ansage diejenige ist, die durch das Heimatnetz-Dienstuntersystem (20H, 30) bereitgestellt oder angezeigt wird.

4. Ein Verfahren gemäß einem vorhergehenden Anspruch, bei dem die Ansage in einer Speichereinrichtung (32) des Heimatnetzes (29) gehalten wird und bei Schritt (b) durch das Heimatnetz-Dienstuntersystem (20H, 30) an das Dienstuntersystem des besuchten Netzes (20V) weitergeleitet wird.

5. Ein Verfahren gemäß Anspruch 4, bei dem das Heimatnetz-Dienstuntersystem einen Dienststeuerpunkt (30) aufweist, mit dem die Speichereinrichtung (32) verbunden ist.

6. Ein Verfahren gemäß einem der Ansprüche 1 bis 3, bei dem die Ansage in der Speichervorrichtung (32) des Heimatnetzes (29) gehalten wird und bei Schritt (b) durch das Heimatnetz-Dienstuntersystem (20H, 30) zum Abrufen durch das Dienstuntersystem des besuchten Netzes (20V) angezeigt wird.

7. Ein Verfahren gemäß einem der Ansprüche 1 bis 3, bei dem die Ansage in einer Speichereinrichtung (51) eines Datennetzes (50) gehalten wird, das zu dem Kommunikationssystem extern ist, wobei die Ansage bei Schritt (b) durch das Heimatnetz-Dienstuntersystem (20H, 30) abgerufen wird und durch dasselbe an das Dienstuntersystem des besuchten Netzes (20V) weitergeleitet wird.

8. Ein Verfahren gemäß einem der Ansprüche 1 bis 3, bei dem die Ansage in einer Speichereinrichtung (51) eines Datennetzes (50) gehalten wird, das zu dem Kommunikationssystem extern ist, wobei die Ansage bei Schritt (b) durch das Heimatnetz-Dienstuntersystem (20H, 30) angezeigt wird und dann durch das Dienstuntersystem des besuchten Netzes (20V) abgerufen wird.

9. Ein Verfahren gemäß Anspruch 7 oder 8, bei dem das externe Datennetz (50) das Internet/Intranet ist und die Ansage eine persönliche ist, die von dem Benutzer bestimmt und auf einem Internet-/Intranetserver (51) gehalten wird.

10. Ein Verfahren gemäß Anspruch 9, bei dem der Server (51) ein HTTP-Server ist und das Heimatnetz-Dienstuntersystem (20H, 30) durch ein Weiterleiten der URL der Ansage dem besuchten Netz denselben anzeigt.

11. Ein Verfahren gemäß Anspruch 1, bei dem die Ansage über ein Signalisierungssystem (31) des Kommunikationssystems an die Medienliefereinrichtung (35) des besuchten Netzes übertragen wird.

12. Ein Verfahren gemäß einem vorhergehenden Anspruch, bei dem das Kommunikationssystem ein Mobiltelefonsystem ist.

## Revendications

1. Procédé de facilitation de la fourniture d'un service à un utilisateur (12) abonné pour un service particulier auprès d'un réseau domestique (29) d'un système de communications, tandis que l'utilisateur est en itinérance dans un autre réseau (40), appelé ici un réseau "visité", du système de communications, ledit service particulier possédant une annonce qui lui est associée et qui est accessible à un sous-système (20H, 30) du service du réseau domestique (29), le procédé comprenant les étapes consistant à :
(a) déterminer la présence de l'utilisateur (12) dans un dit réseau visité (40) et identifier le sous-système (20H, 30) de service du réseau domestique de l'utilisateur ;
(b) soit avant que ledit service particulier soit requis, soit lorsqu'il l'est, en ce qui concerne l'utilisateur (12) tandis que celui-ci est en itinérance dans ledit réseau visité (40), amener le sous-système (20H, 30) de service du réseau domestique de l'utilisateur, soit à transmettre l'annonce associée avec le service requis à un sous-système (20V) de service du réseau visité (40), soit à diriger ce dernier vers cette annonce, ladite annonce étant transférée à un moyen de fourniture (35) de contenu du sous-système de service du réseau visité (40) par l'intermédiaire d'un réseau (50) de données, et
(c) fournir l'annonce à l'utilisateur (12), pendant la fourniture du service dans le réseau visité (40), à partir du moyen de fourniture (35) de contenu du réseau visité, par l'intermédiaire d'une connexion de support du réseau visité.

2. Procédé selon la revendication 1, dans lequel, lorsque ledit service est requis tandis que l'utilisateur (12) est en itinérance sur le réseau visité (40), une logique de service fournissant le service est exécutée par le sous-système (20H, 30) de service du réseau domestique (29), les résultats étant transmis au sous-système (20V) des service du réseau visité (40), l'annonce associée au service étant fournie, ou désignée, par le sous-système (20H, 30) de service du réseau domestique et étant utilisée par le sous-système (20V) de service du réseau visité afin de fournir le service.

3. Procédé selon la revendication 1, dans lequel ledit service est un service classique fourni tant par le sous-système (20H, 30) de service du réseau domestique (29) que par le sous-système (20V) de service du réseau visité (40), les deux systèmes possédant une logique de service pour mettre en application le service, de sorte que le sous-système (20V) de service du réseau visité exécute sa logique de service pour le service lorsque le service est requis tandis que l'utilisateur (12) est en itinérance dans le réseau visité (40), mais l'annonce associée utilisée est celle qui est fournie, ou désignée, par le sous-système (20H, 30) du service de réseau domestique.

4. Procédé selon l'une quelconque des revendications précédentes, dans lequel ladite annonce est contenue dans un moyen de stockage (32) du réseau domestique (29) et est transmise à l'étape (b) par le sous-système (20H, 30) de service du réseau domestique au sous-système (20V) de service du réseau visité.

5. Procédé selon la revendication 4, dans lequel ledit sous-système de service du réseau domestique comprend un point de commande (30) de service auquel ledit moyen de stockage (32) est connecté.

6. Procédé selon l'une quelconque des revendications 1 à 3, dans lequel ladite annonce est contenue dans ledit moyen de stockage (32) du réseau domestique (29) et est désignée à l'étape (b) par le sous-système (20H, 30) du service de réseau domestique pour extraction par le sous-système (20V) de service du réseau visité.

7. Procédé selon l'une quelconque des revendications 1 à 3, dans lequel ladite annonce est contenue dans un moyen de stockage (51) d'un réseau (50) de données extérieur audit système de communications, l'annonce étant extraite à l'étape (b) par le sous-système (20H, 30) du service de réseau domestique et transmise par lui au sous-système (20V) de service du réseau visité.

8. Procédé selon l'une quelconque des revendications 1 à 3, dans lequel ladite annonce est contenue dans un moyen de stockage (51) d'un réseau (50) de données extérieur audit système de communications, l'annonce étant désignée à l'étape (b) par le sous-système (20H, 30) du service de réseau domestique et extraite ensuite par le sous-système (20V) de service du réseau visité.

9. Procédé selon la revendication 7 ou la revendication 8, dans lequel ledit réseau externe (50) de données est l'Internet/Intranet et l'annonce est une annonce personnelle déterminée par l'utilisateur et contenue sur un serveur (51) d'Internet/Intranet.

10. Procédé selon la revendication 9, dans lequel ledit serveur (51) est un serveur à protocole HTTP, et le sous-système (20H, 30) de service de réseau domestique lui désigne le réseau visité en transmettant l'adresse universelle, ou URL, de l'annonce.

11. Procédé selon la revendication 1, dans lequel ladite annonce est transférée au moyen de fourniture (35) de contenu du réseau visité par l'intermédiaire d'un système de signalisation (31) du système de communications.

12. Procédé selon l'une quelconque des revendications précédentes, dans lequel ledit système de communications est un système de téléphone mobile.
